# EUROPÄISCHE PATENTSCHRIFT

(11) **EP 3 098 033 B1**
(45) Veröffentlichungstag und Bekanntmachung des Hinweises auf die Patenterteilung: **10.07.2019**
(21) Anmeldenummer: 16171044.7
(22) Anmeldetag: 24.05.2016
(51) Int. Cl.: B25J 9/16

(54) **ERMITTLUNG DER ROBOTERACHSWINKEL UND AUSWAHL EINES ROBOTERS MIT HILFE EINER KAMERA**
DETERMINATION OF THE ROBOT AXLE ANGLE AND SELECTION OF A ROBOT WITH THE AID OF A CAMERA
DETERMINATION D'UN ANGLE DES AXES D'UN ROBOT ET SELECTION D'UN ROBOT A L'AIDE D'UNE CAMERA

(30) Priorität: 29.05.2015 DE 102015209896
(43) Veröffentlichungstag der Anmeldung: 30.11.2016
(73) Patentinhaber: KUKA Deutschland GmbH, 86165 Augsburg (DE)
(72) Erfinder: HIETMANN, Gerhard, 86405 Herbertshofen (DE)
(74) Vertreter: Mader, Joachim

(56) Entgegenhaltungen:
- JP-A- 2012 171 024
- US-A1- 2009 210 090
- KALMAN BOLLA ET AL: "A fast image processing based robot identification method for Surveyor SRV-1 robots", ADVANCED INTELLIGENT MECHATRONICS (AIM), 2011 IEEE/ASME INTERNATIONAL CONFERENCE ON, IEEE, 3. Juli 2011 (2011-07-03), Seiten 1003-1009, XP032053609, DOI: 10.1109/AIM.2011.6027147 ISBN: 978-1-4577-0838-1
- MIGUEL CONTRERAS ET AL: "Robot Identification using Shape Features on an FPGA-Based Smart Camera", IMAGE AND VISION COMPUTING NEW ZEALAND, ACM, 2 PENN PLAZA, SUITE 701 NEW YORK NY 10121-0701 USA, 19. November 2014 (2014-11-19), Seiten 282-287, XP058065351, DOI: 10.1145/2683405.2683437 ISBN: 978-1-4503-3184-5
- Gao: "Stereo vision matching for posture recognition of manipulator--《Optics and Precision Engineering》2010年02期" , , 1. Februar 2010 (2010-02-01), Seiten 1-3, XP055286234, Gefunden im Internet: URL:http://en.cnki.com.cn/Article_en/CJFDT OTAL-GXJM201002030.htm [gefunden am 2016-07-06]
- Javier Ruiz-Del-Solar ET AL: "VISUAL DETECTION OF LEGGED ROBOTS AND ITS APPLICATION TO ROBOT SOCCER PLAYING AND REFEREEING", International Journal of Humanoid Robotics, 1 December 2010 (2010-12-01), pages 669-698, XP055479736, DOI: 10.1142/S0219843610002222 Retrieved from the Internet: URL:https://pdfs.semanticscholar.org/6018/ 6dcef9cc1c415f7e784fef4dabe0f6a7b3d4.pdf

## Beschreibung

### 1. Technischer Bereich

Die vorliegende Erfindung betrifft ein Verfahren zum Identifizieren eines Manipulators mittels eines tragbaren Endgerätes, als auch ein entsprechendes tragbares Endgerät und ein Robotersystem.

### 2. Technischer Hintergrund

Manipulatoren, und insbesondere Industrieroboter, sind automatisch gesteuerte, freiprogrammierbare Mehrzweck-Maschinen. Sie können beispielsweise in unterschiedlichen Bereichen einer Fertigungsanlage eingesetzt werden, um beispielsweise in einer Bearbeitungsstation oder einer Vermessungsstation ein Bauteil oder Werkstück zu bearbeiten oder zu vermessen. Im industriellen Umfeld werden üblicherweise mehrere Manipulatoren in räumlicher Nähe zueinander eingesetzt, welche verschiedene, ähnliche oder gleiche Aufgaben durchführen können.

In modernen industriellen Anlagen mit einem gewissen Grad an Automatisierungstechnik besteht oft die Anforderung, Statusinformationen eines Robotersystems abzurufen, um zum Beispiel aktuelle Prozessparameter zu überprüfen, Fehler einzugrenzen oder auch Programm- bzw. Parameteränderungen vorzunehmen. Es kann beispielsweise die Notwendigkeit bestehen, zu einem bestimmten Zeitpunkt eine Statusinformation eines bestimmten Robotersystems abzurufen. Hierzu muss die entsprechende Robotersteuerung des Robotersystems, welche gewöhnlich die Statusinformation bereitstellt, zunächst identifiziert und adressiert werden. Hierfür kann beispielsweise durch einen Benutzer an einem Eingabegerät eine Steuerungsadresse oder ähnliches manuell eingegeben werden, welche die Robotersteuerung eindeutig identifiziert und evtl. ein Ansteuern der Robotersteuerung erlaubt. Dies ist jedoch nachteilhaft, da die Adresse bekannt sein und eingegeben werden muss. Das Verfahren ist also relativ aufwendig.

Aus einem anderen Verfahren ist es bekannt, spezielle Markierungen, wie beispielsweise einen QR-Code oder ein RFID-Tag, auf einem Robotersystem bereitzustellen, und diese Markierung bei Bedarf zu lesen und dadurch das Robotersystem und die entsprechende Robotersteuerung zu identifizieren. Allerdings ist auch dieses Verfahren mit Nachteilen verbunden, da diese Markierungen oder Tags an der betreffenden Steuerung oder Mechanik angebracht werden müssen. Es kann ferner auch vorkommen, dass diese Markierungen aufgrund einer ungünstigen Konfiguration temporär verdeckt sein können, und somit nicht gelesen werden kann. Das Verfahren ist folglich ebenfalls relativ aufwendig und zudem unzuverlässig.

Die JP 2012 171024 beschreibt eine Bedienvorrichtung mit einem Touchscreen zum Anzeigen eines von einer Kamera aufgenommenen Kamerabildes. Ferner wird ein Robotererkennungsabschnitt beschrieben, zum Erkennen einer dreidimensionalen Position und Haltung des Roboters basierend auf dem Kamerabild. Ein CG-Syntheseabschnitt ist bereitgestellt zum Erzeugen eines CG-Bildes des Roboters auf der Grundlage der Position und der Haltung, die durch den Robotererkennungsabschnitt erkannt werden.

Das Dokument "A Fast Image Processing Based Robot Identification Method for Surveyor SRV-1 Robot" von Kalman Bolla et al., 2011 IEEE/ASME International Conference on Advanced Intelligent Mechatronics (AIM 2011), Budapest, Hungary, July 3-7, 2011, beschreibt, dass jeder Roboter in einem Schwarm mit einem einzigartigen barcodeähnlichen Muster versehen sein kann.

Das Dokument "Visual detection of legged robots and its application to robot soccer playing and refereeing" von Javier Ruiz-Del-Solar et al., 2010, International Journal of Humanoid Robotics, Vol. 07, No. 04, Seiten. 669-698 befasst sich mit der visuellen Erkennung von Robotern unter Verwendung von Kaskaden von verschachtelten Klassifikatoren, des Adaboost-Boost-Algorithmus und domain-partitionierungsbasierten schwachen Klassifikatoren.

Es ist somit eine Aufgabe der vorliegenden Erfindung eine Methode bereitzustellen, mit welcher ein Manipulator bzw. ein Robotersystem einfach und möglichst fehlerfrei identifiziert werden kann. Dabei ist es insbesondere eine Aufgabe der vorliegenden Erfindung, eine Methode bereitzustellen, mit welcher aus einer Mehrzahl von Manipulatoren mit Hilfe eines tragbaren Bediengerätes ein bestimmter Manipulator ausgewählt werden kann. Eine weitere Aufgabe der vorliegenden Erfindung ist es, die oben beschriebenen Nachteile zumindest teilweise zu beseitigen.

Diese und weitere Aufgaben, welche beim Lesen der folgenden Beschreibung ersichtlich werden, werden durch den Gegenstand des Hauptanspruchs und der Nebenansprüche gelöst.

### 3. Inhalt der Erfindung

Die vorliegende Erfindung betrifft ein Verfahren zum Identifizieren eines Manipulators mittels eines tragbaren Endgerätes nach Anspruch 1, ein tragbares Endgerät nach Anspruch 13 sowie ein Robotersystem nach Anspruch 14. Das tragbare Endgerät kann beispielsweise ein mobiles Konsumer-Eingabegerät, wie beispielsweise ein Tablet-PC, eine Smartwatch, ein Smartphone oder ähnliches sein, oder auch ein mobiles Roboter-Bediengerät. Das tragbare Endgerät umfasst dabei eine 3D-Kamera. Die 3D-Kamera ist dabei vorzugsweise eine plenoptische Kamera, welche auf dem Prinzip von Lichtfeldsensoren basiert. Derartige Lichtfeldsensoren bestehen aus einem Feld von Mikrolinsen, und halten das Licht und die Farbe des fotografierten Objekts fest. Ferner wird auch die Richtung erfasst, aus welcher die Lichtstrahlen eintreffen. Mit Hilfe von Lichtfeldsensoren lässt sich somit unter anderem der Fokus des Bildes im Nachhinein verändern, und es können 3D-Modelle von abgelichtetem Objekt erstellt werden.

Das erfindungsgemäße Verfahren weist ein Erfassen eines dreidimensionalen Bildes mittels der 3D-Kamera des tragbaren Endgeräts von zumindest einem Teil des zu identifizierenden Manipulators auf. Vorzugsweise wird dabei der gesamte zu identifizierende Manipulator mittels der 3D-Kamera erfasst. Basierend auf dem erfassten dreidimensionalen Bild wird ein Ist-Zustand des Manipulators ermittelt. Ferner werden gemäß dem erfindungsgemäßen Verfahren Referenz-Zustände des Manipulators bereitgestellt, und der Manipulator basierend auf dem ermittelten Ist-Zustand und den bereitgestellten Ist-Referenz-Zuständen identifiziert.

Ein Ist-Zustand bzw. ein Referenz-Zustand beschreibt dabei bevorzugt eine Konfiguration eines Manipulators. Vorzugsweise umfasst ein Zustand eines Manipulators Informationen über zumindest eines der folgenden: Eine Pose des Manipulators, einen Achswinkel des Manipulators, eine Position des Manipulators, eine Orientierung des Manipulators, oder eine zeitliche Änderung einer dieser Werte. Ferner kann der Zustand eines Manipulators auch Informationen über absolute Größen (bzw. Abmessungen) und/oder Größenverhältnisse von einzelnen Komponenten des Manipulators umfassen. Diese Komponenten können dabei beispielsweise einen Manipulatorarm oder einen Greifer umfassen. Anhand des Zustands eines Manipulators kann dieser vorteilhaft von anderen Manipulatoren unterschieden werden, da jeder Manipulator üblicherweise durch eine eigenen, individuellen Zustand ausgezeichnet ist.

Mittels des erfindungsgemäßen Verfahrens ist es somit möglich, einen Manipulator auf intuitive Weise auszuwählen bzw. zu identifizieren. Es werden keine Marker, Markierungen oder Tags benötigt, sondern basierend auf einem erfassten dreidimensionalen Bild ein Zustand des Manipulators ermittelt. Basierend auf diesem ermittelten Zustand und bereitgestellten Referenz-Zuständen kann der Manipulator vorteilhaft eindeutig und automatisch identifiziert werden. Die Verwendung der 3D-Kamera erlaubt es auch, einen Manipulator aus einer größeren Entfernung zu Identifizieren, beispielsweise wenn der Bediener des tragbaren Endgerätes von dem Manipulator aufgrund eines Schutzzaunes räumlich getrennt ist. So kann der Bediener in einer sicheren Entfernung zu dem Manipulator sein und diesen trotzdem identifizieren. Ferner muss aufgrund der Verwendung einer 3D-Kamera vorteilhaft nur ein Bild von dem zu identifizierenden Manipulator (oder von einem Teil dieses Manipulators) erfasst werden, da das erfasste dreidimensionale Bild ausreichend Informationen beinhaltet, welche eine eindeutige Erkennung des Manipulators erlaubt.

Vorzugsweise erfolgt das Bereitstellen von Referenz-Zuständen durch eine Manipulatorsteuerung (Robotersteuerung). Vorzugsweise können die Referenz-Zustände dabei Referenz-Zustände von mehreren Manipulatoren umfassen, von welchen einer der zu identifizierende Manipulator ist. Beispielsweise kommuniziert die Manipulatorsteuerung zyklisch die Achswinkel eines oder mehrerer an ihr angeschlossenen Kinematiken bzw. Manipulatoren. Somit wird vorzugsweise das Erfassen des dreidimensionalen Bildes, das Ermitteln des Ist-Zustandes des Manipulators und das Identifizieren des Manipulators durch das tragbare Endgerät durchgeführt. Das tragbare Endgerät empfängt dabei vorzugsweise die Referenz-Zustände aller sendenden Manipulatorsteuerungen in seinem Empfangsbereich, und führt den Schritt des Identifizierens des Manipulators basierend auf unter anderem diesen empfangenen Referenz-Zuständen aus. Es werden also vorteilhaft mittels des erfindungsgemäßen Verfahrens alle relevanten Manipulatoren in z.B. einem Raum betrachtet, um festzustellen, welcher der zu identifizierende Manipulator ist.

Vorzugsweise erfolgt das Bereitstellen von Referenz-Zuständen drahtlos. Das tragbare Endgerät ist somit für einen mobilen Einsatz eingerichtet, und kann problemlos in beispielsweise einer Werkhalle von einer Station zu einer anderen transportiert werden, und direkt mit den relevanten Manipulatorsteuerungen kommunizieren. Folglich kann ein Benutzer ohne großen Aufwand gewünschte Manipulatoren einfach und intuitiv identifizieren, und anschließend beispielsweise Statusinformationen des identifizierten Manipulators überprüfen.

Vorzugsweise umfasst das Identifizieren des Manipulators ein Bestimmen, ob der ermittelte Ist-Zustand des Manipulators mit zumindest einem der bereitgestellten Referenz-Zustände des Manipulators übereinstimmt. Es werden also beispielsweise alle bereitgestellten Referenz-Zustände mit dem ermittelten Ist-Zustand des Manipulators verglichen, um festzustellen, ob und welcher der bereitgestellten Referenz-Zustände des Manipulators mit dem ermittelten Ist-Zustand übereinstimmt. Wenn eine solche Übereinstimmung bestimmt bzw. festgestellt wird, kann vorzugsweise direkt der entsprechende Manipulator identifiziert werden, da die Herkunft und Umstände des übereinstimmenden bereitgestellten Referenz-Zustandes (etwa aufgrund von Zeit-Markierungen, etc.) vorteilhaft bekannt sind.

Vorzugsweise umfasst das Identifizieren des Manipulators ein Auswählen eines der bereitgestellten Referenz-Zustände, so dass der ausgewählte Referenz-Zustand etwa zeitgleich mit dem Erfassen des dreidimensionalen Bildes erstellt wurde. Es wird also ein Referenz-Zustand ausgewählt, der einen Zustand des Manipulators zu etwa der Zeit beschreibt, zu welcher das dreidimensionale Bild des Manipulators erfasst wurde. Wenn Referenz-Zustände mehrerer Manipulatoren bereitgestellt wurden, kann somit beispielsweise die Auswahlmöglichkeit dahingehend eingeschränkt werden, dass nur solche Referenz-Zustände zum Identifizieren des Manipulators verwendet werden, die etwa zu der Zeit erstellt wurden, zu der das dreidimensionale Bild erfasst wurde. Hierzu können beispielsweise Zeit-Markierungen der Referenz-Zustände verwendet werden, oder die zum Zeitpunkt des Erfassens des dreidimensionalen Bildes bereitgestellten Referenz-Zustände entsprechend gekennzeichnet werden, so dass diese zur Identifizierung des Manipulators herangezogen werden. Da aufgrund von technischen Voraussetzungen eine perfekte zeitliche Übereinstimmung selten vorliegen kann, kann beispielsweise auch eine entsprechende Toleranz verwendet werden.

Vorzugsweise umfasst das Identifizieren des Manipulators ein Auswählen eines der bereitgestellten Referenz-Zustände, so dass der ausgewählte Referenz-Zustand nächstliegend zu dem ermittelnden Ist-Zustand des Manipulators ist. Es wird also beispielsweise verglichen, welcher aller bereitgestellten Zustände, welche beispielsweise mehrere Manipulatoren in einer Werkshalle beschreiben können, am ehesten zu dem Manipulator passt, welcher identifiziert werden soll (und zumindest teilweise mittels der 3D-Kamera abgebildet wurde). Hierzu kann weiter vorzugsweise ein vordefinierter Toleranzwert verwendet werden, und das Auswählen eines der bereitgestellten Referenz-Zustände derart erfolgen, dass eine Differenz zwischen dem ausgewählten Referenz-Zustand und dem ermittelten Ist-Zustand geringer als der vordefinierte Toleranzwert ist. Somit ist es möglich, möglichst fehlerfrei und trotzdem mit einer hohen Genauigkeit einen passenden Referenz-Zustand auszuwählen und den entsprechenden Manipulator effizient zu identifizieren.

Vorzugsweise erfolgt das Auswählen eines der bereitgestellten Referenz-Zustände durch einen stationären Computer bzw. Rechner, wie beispielsweise durch einen zentralen Computer oder einen Host-Computer. Dabei werden insbesondere vorzugsweise die Referenz-Zustände durch eine Manipulator- bzw. Robotersteuerung dem Computer bereitgestellt. Der Computer kann beispielsweise kabelgebunden oder kabellos in einem Netzwerk integriert sein, und beispielsweise zur Programmarchivierung, für Software-Updates, Sammlung von Produktionsinformation oder ähnlichem verwendet werden. Ferner vorzugsweise stellt das tragbare Endgerät das erfasste dreidimensionale Bild und/oder den ermittelten Ist-Zustand des Manipulators dem Rechner zur Verfügung. Anschließend erfolgt vorzugsweise gegebenenfalls der Schritt des Ermittelns des Ist-Zustandes des Manipulators durch den zentralen Rechner, sowie das Auswählen eines der bereitgestellten Referenz-Zustände gemäß der vorliegenden Erfindung.

Vorzugsweise erfolgt das Ermitteln eines Ist-Zustandes des Manipulators wie beschrieben durch das tragbare Endgerät oder einen stationären Computer, welcher ortsfest installiert ist. Je nach Rechenstärke des tragbaren Endgerätes kann somit effektiv die Arbeitslast zwischen dem tragbaren Endgerät und dem stationären Computer verteilt werden.

Vorzugsweise umfasst der Ist-Zustand des Manipulators Informationen über zumindest eines der folgenden: Ist-Pose des Manipulators, Ist-Achswinkel des Manipulators, Ist-Position des Ist-Manipulators, Ist-Orientierung des Manipulators, kartesische Ist-Position eines Werkzeugmittelpunktes des Manipulators, oder eine zeitliche Änderung der genannten Werte, oder Ist-Größen und/oder Ist-Größenverhältnisse einzelner Komponenten des Manipulators. Der Ist-Zustand des Manipulators kann aus dem erfassten dreidimensionalen Bild erhalten werden. Vorzugsweise umfassen die Referenz-Zustände des Manipulators dementsprechend Informationen über zumindest eines der folgenden: Referenz-Posen des Manipulators, Referenz-Achswinkel des Manipulators, Referenz-Positionen des Manipulators, Referenz-Orientierungen des Manipulators, kartesische Referenz-Positionen eines Werkzeugmittelpunktes des Manipulators oder zeitliche Änderungen der genannten Werte, oder Referenz-Größen und/oder Referenz-Größenverhältnisse einzelner Komponenten des Manipulators. Entsprechend kann eine möglichst eindeutige Zuordnung zwischen dem zu identifizierenden Manipulator und den bekannten Manipulatoren vorgenommen werden.

Vorzugsweise ist die 3D-Kamera eine plenoptische Kamera, und das Erfassen eines dreidimensionalen Bildes umfasst ein Umfassen eines vierdimensionalen Lichtfeldes des zumindest einen Teils des zu identifizierenden Manipulators. Somit können beispielsweise Achswinkel eines Roboters bzw. eines Manipulators, oder generell ein Zustand des Manipulators, mit einer hohen Genauigkeit ermittelt werden.

Vorzugsweise umfasst das tragbare Endgerät ein Darstellungsteil, welches das erfasste Bild darstellt. Somit kann ein Bediener des tragbaren Endgerätes direkt erkennen, ob ein passendes Bild des zu identifizierenden Manipulators erfasst wurde oder nicht. Dadurch kann eine fehlerhafte Identifizierung durch Erfassen eines Bildes von einem nicht zu identifizierenden Manipulator vermieden werden.

Ferner betrifft die vorliegende Erfindung ein tragbares Endgerät, welches eines 3D-Kamera und eine Gerätesteuerung umfasst, wobei die Gerätesteuerung eingerichtet ist aus einem erfassten Bild eines Manipulators den Ist-Zustand der Achswinkel des Manipulators zu bestimmen und wobei die Gerätesteuerung vorzugsweise weiter eingerichtet ist ein erfindungsgemäßes Verfahren zum Identifizieren eines Manipulators durchzuführen. Da keine aufwendigen Bedienfelder notwendig sind, um einen Manipulator zu identifizieren, kann das tragbare Endgerät eine geringe Größe aufweisen und sich somit für einen mobilen und angenehmen Einsatz eignen.

Weiterhin betrifft die vorliegende Erfindung ein Robotersystem, umfassend einen Manipulator und ein tragbares Endgerät, welches Endgerät eine 3D-Kamera umfasst. Das Robotersystem weist dabei ferner eine Steuerung auf, welche eingerichtet ist, ein erfindungsgemäßes Verfahren zum Identifizieren eines Manipulators durchzuführen. Vorzugsweise ist die 3D-Kamera des tragbaren Endgerätes eine plenoptische Kamera.

### 4. Ausführungsbeispiele

Im Folgenden wir die vorliegende Erfindung unter Bezugnahme auf die beiliegenden Zeichnungen näher beschrieben. Dabei zeigen:
Fig. 1 beispielhaft einen zu identifizierenden Manipulator;
Fig. 2 den Ablauf eines erfindungsgemäßen Verfahrens zum Identifizieren eines Manipulators, und
Fig. 3 den Ablauf eines weiteren erfindungsgemäßen Verfahrens zum Identifizieren eines Manipulators.

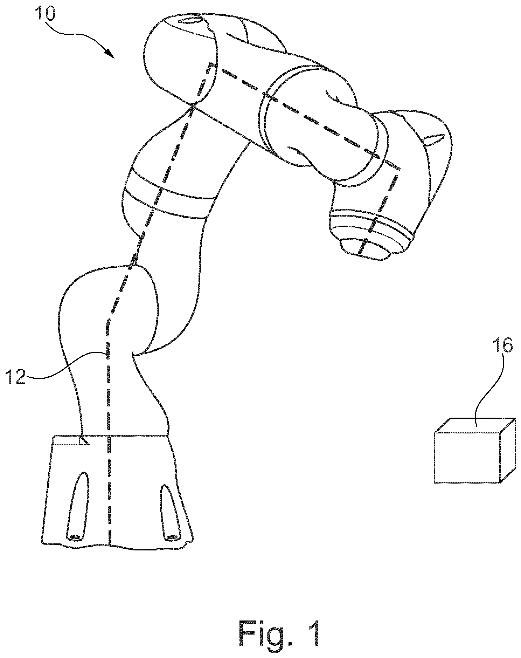

Die Fig. 1 zeigt beispielhaft einen Manipulator 10, welcher als mehrachsiger Gelenkarmroboter ausgebildet ist. Der dargestellte Manipulator 10 befindet sich beispielsweise in einer Werkshalle zusammen mit weiteren Manipulatoren (nicht gezeigt), und soll aus der Mehrzahl dieser Manipulatoren mittels eines tragbaren Endgerätes 16 identifiziert und adressiert werden.

Das tragbare Endgerät 16 umfasst dabei eine 3D-Kamera (nicht gezeigt), welche eine plenoptische Kamera ist und auf dem Prinzip von Lichtfeldsensoren basiert. Zum Identifizieren des Manipulators 10 wird ein dreidimensionales Bild mit dem tragbaren Endgerät 16 aufgenommen, und basierend auf dem erfassten Bild ein einfaches dreidimensionales Strichmodell 12, dargestellt in Fig. 1 durch die gestrichelte Linie, des Manipulators ermittelt. Anhand dieses dreidimensionalen Strichmodells 12 können beispielsweise Achswinkel oder eine Pose des Manipulators erkannt bzw. berechnet werden.

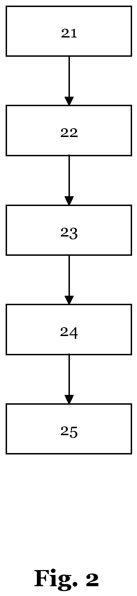

In Fig. 2 ist schematisch ein Ablauf eines Verfahrens zum Identifizieren eines Manipulators dargestellt, welches im Folgenden unter Bezugnahme auf der in Fig. 1 dargestellten Konfiguration beschrieben wird. Im Schritt 21 kommuniziert jede Manipulatorsteuerung der Mehrzahl von Manipulatoren, in z.B. einer Werkshalle, zyklisch die Achswinkel ihrer angeschlossenen Manipulatoren (und/oder weitere Objektinformationen, wie z. B. die aktuellen kartesischen Positionen der Werkzeugmittelpunkte, Werkzeug-Volumenmodelle, Umgebungsmodelle etc.), unter anderem des zu identifizierenden Manipulators 10, über Funk. Das tragbare Endgerät 16 empfängt die Information (ReferenzWerte) aller in seinem Empfangsbereich sendenden Manipulatorsteuerungen.

In Schritt 22 wird die Kamera des tragbaren Endgeräts 16 auf den Manipulator 10 ausgerichtet, und ein Bild von diesem Manipulator 10 wird aufgenommen. Basierend auf einem zuvor bereitgestellten Modell des Manipulators 10 werden anhand der 3D-Bilddaten alle Ist-Achswinkel des Manipulators 10 ermittelt.

In Schritt 23 selektiert das tragbare Endgerät 16 die im Schritt 21 empfangenen Informationen in der Hinsicht, dass nur jene Informationen verwendet werden, welche beispielsweise die Achswinkel der Manipulatoren zum Zeitpunkt der Aufnahme des Bildes beschreiben. Anschließend vergleicht das tragbare Endgerät 16 diese mit den ermittelten Ist-Achswinkeln (und/oder weiteren Objektinformationen).

In Schritt 24 wird bei Übereinstimmung die gewünschte Manipulatorsteuerung identifiziert. Es wurde also eine Zuordnung zwischen den aus den Bilddaten erhaltenen Ist-Achswinkel und aller bereitgestellter Achswinkel (Referenz-Achswinkel) getroffen, so dass der abgebildete Manipulator eindeutig identifiziert werden kann.

Anschließend kann das tragbare Endgerät in Schritt 25 eine Verbindung zu dem identifizieren Manipulator bzw. zu der identifizierten Steuerung aufnehmen, und mit diesem bzw. dieser interagieren. Beispielsweise können Zustände gelesen werden, Parameter gesetzt werden, oder Meldungen angezeigt und/oder quittiert werden.

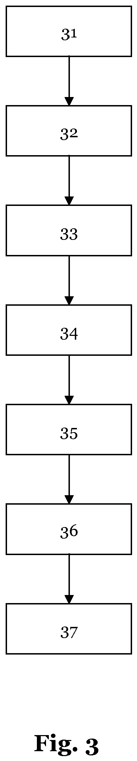

Fig. 3 zeigt schematisch den Ablauf eines weiteren erfindungsgemäßen Verfahrens zum Identifizieren eines Manipulators, wie zum Beispiel zum Identifizieren des Manipulators 10 aus Fig. 1. Das Verfahren beginnt in Schritt 31, in welchem Schritt alle Manipulatorsteuerungen eine Netzwerkverbindung mit einem zentralen Rechner (stationärer Computer) aufnehmen.

In Schritt 32 kommunizieren all diese Manipulatorsteuerungen ihre aktuellen Achswinkel (und/oder weitere Objektinformationen) an den zentralen Rechner. Vorzugsweise erfolgt dies zyklisch, beispielsweise zu jedem IPO-Takt.

In Schritt 33 wird mittels der 3D-Kamera des tragbaren Endgeräts 16 ein dreidimensionales Bild eines zu identifizierenden Manipulators 10 aufgenommen. Dieses Bild enthält dreidimensionale Informationen, welche beispielsweise ein Erstellen eines dreidimensionalen Modells des zu identifizierenden Manipulators 10 ermöglichen.

In Schritt 34 wird dem zentralen Rechner das aufgenommene Bild bereitgestellt, und Roboter- bzw. Manipulator-Achswinkel werden von dem zentralen Rechner basierend auf dem bereitgestellten Bild ermittelt. Alternativ können die Achswinkel auch in dem tragbaren Endgerät ermittelt werden und anschließend dem zentralen Rechner zur Verfügung gestellt werden.

In Schritt 35 vergleicht der zentrale Rechner die aus dem Bild ermittelten Ist-Achswerte mit den in Schritt 32 von den Manipulatorsteuerungen gelieferten Referenz-Achswinkeln. Hierzu können Toleranzen berücksichtigt werden, um ein effizientes Vergleichen zu ermöglichen.

In Schritt 36 wird bei einer Übereinstimmung die gewünschte Steuerung identifiziert und eine Nachricht an das tragbare Endgerät 16 gesendet, welches diesem erlaubt, eine Verbindung zu der identifizierten Steuerung aufzunehmen. Beispielsweise kann dem tragbaren Endgerät 16 die entsprechende Adresse der Steuerung bereitgestellt werden, so dass das tragbare Endgerät 16 automatisch eine Verbindung zu dieser aufbauen kann.

In Schritt 37 interagiert das tragbare Endgerät mit der identifizierten Steuerung, wobei beispielsweise Anfragen von Statusinformationen oder ähnliches übertragen werden.

Um die Genauigkeit bzw. Präzision des Vergleichs weiter zu erhöhen, können zusätzlich oder alternativ zu der Betrachtung der Achswinkel zum Beispiel auch Volumenmodelle verwendet werden, beispielsweise des verwendeten Werkzeugs, Endeffektors, eines Bauteils in der Nähe des Manipulators, ein Umgebungsmodell des Roboters bzw. Manipulators selbst, etc.

Anstatt eines erfassten dreidimensionalen Bildes können auch mehrere dreidimensionale Bilder und/oder eine dreidimensionale Videoaufnahme des zu identifizierenden Manipulators verwendet werden. Beispielsweise können mehrere Bilder aus verschiedenen Blickrichtungen aufgenommen werden. Ferner beispielsweise kann auch eine dynamische Bildaufnahme und Verarbeitung durchgeführt werden. Somit kann eine noch sicherere Manipulator-Identifikation ermöglicht werden, da nun auch Dynamikdaten aus dem Bild mit den Dynamikdaten der Manipulatorsteuerungen verglichen werden können, wie beispielsweise eine Kontur des Werkzeugmittelpunkts im Raum, achsspezifische oder kartesische Geschwindigkeiten, und dergleichen.

### Bezugszeichenliste:

- 10: Manipulator
- 12: dreidimensionales Strichmodell
- 16: tragbares Endgerät

## Patentansprüche

1. Verfahren zum Identifizieren eines Manipulators (10) aus einer Mehrzahl von Manipulatoren mittels eines tragbaren Endgerätes (16), wobei jeder Manipulator eine Manipulatorsteuerung umfasst und wobei das tragbare Endgerät (16) eine 3D-Kamera umfasst, das Verfahren aufweisend folgende Schritte:
i) zyklische Kommunikation (21; 32) der aktuellen Achswinkel und/oder anderer Objektinformationen von jeder Manipulatorsteuerung;
ii) Empfangen (34) aktueller Achswinkel und/oder anderer Objektinformationen als Referenz-Zustände;
a) Erfassen (22; 33) eines dreidimensionalen Bildes mittels der 3D-Kamera des tragbaren Endgeräts (16) von zumindest einem Teil des zu identifizierenden Manipulators (10);
b) Ermitteln (22; 34) eines Ist-Zustandes des Manipulators (10) basierend auf dem erfassten dreidimensionalen Bild, wobei der Ist-Zustandes des Manipulator- Achswinkel und/oder andere Objektinformationen enthält;
c) Identifizieren (23, 24; 35, 36) des Manipulators (10) basierend auf dem ermittelten Ist-Zustand und den bereitgestellten Referenz-Zuständen umfassend ein Vergleichen eines der bereitgestellten Referenz-Zustände mit dem erfassten Ist-Zustand,
wobei der Ist-Zustand bzw. die Referenz-Zustände eine Konfiguration des Manipulators (10) beschreiben.

2. Verfahren nach Anspruch 1, wobei das Bereitstellen von Referenz-Zuständen durch eine Manipulatorsteuerung erfolgt.

3. Verfahren nach Anspruch 1 oder 2, wobei das Bereitstellen von Referenz-Zuständen drahtlos erfolgt.

4. Verfahren nach einem der voranstehenden Ansprüche, wobei das Identifizieren (23, 24; 35, 36) des Manipulators (10) ein Bestimmen, ob der ermittelte Ist-Zustand des Manipulators (10) mit zumindest einem der bereitgestellten Referenz-Zuständen des Manipulators (10) übereinstimmt, umfasst.

5. Verfahren nach einem der voranstehenden Ansprüche, wobei das Auswählen eines der bereitgestellten Referenz-Zustände derart erfolgt, so dass der ausgewählte Referenz-Zustand etwa zeitgleich mit dem Erfassen des dreidimensionalen Bildes erstellt wurde.

6. Verfahren nach einem der voranstehenden Ansprüche, wobei das Auswählen eines der bereitgestellten Referenz-Zustände des Manipulators (10) derart erfolgt, so dass der ausgewählte Referenz-Zustand nächstliegend zu dem ermittelten Ist-Zustand des Manipulators (10) ist.

7. Verfahren nach Anspruch 6, wobei das Auswählen eines der bereitgestellten Referenz-Zustände derart erfolgt, dass eine Differenz zwischen dem ausgewählten Referenz-Zustand und dem ermittelten Ist-Zustand geringer als ein vordefinierter Toleranzwert ist.

8. Verfahren nach einem der Ansprüche 5 - 7, wobei das Auswählen eines der bereitgestellten Referenz-Zustände durch einen stationären Computer erfolgt.

9. Verfahren nach einem der voranstehenden Ansprüche, wobei das Ermitteln eines Ist-Zustandes des Manipulators (10) durch das tragbare Endgerät (16) oder einen stationären Computer erfolgt.

10. Verfahren nach einem der voranstehenden Ansprüche, wobei der Ist-Zustand des Manipulators (10) weiterhin Informationen über zumindest eines der folgenden umfasst:
Ist-Pose des Manipulators (10),
Ist-Position des Manipulators (10),
Ist-Orientierung des Manipulators (10),
kartesische Ist-Position eines Werkzeugmittelpunktes des Manipulators (10),
zeitliche Änderung einer Ist-Pose des Manipulators (10),
zeitliche Änderung eines Ist-Achswinkels des Manipulators (10),
zeitliche Änderung einer Ist-Position des Manipulators (10),
zeitliche Änderung einer Ist-Orientierung des Manipulators (10),
zeitliche Änderung einer kartesische Ist-Position eines Werkzeugmittelpunktes des Manipulators (10),
Ist-Größen und/oder Ist-Größenverhältnisse einzelner Komponenten des Manipulators.

11. Verfahren nach einem der voranstehenden Ansprüche, wobei die Referenz-Zustände des Manipulators (10) weiterhin Informationen über zumindest eines der folgenden umfassen:
Referenz-Posen des Manipulators (10),
Referenz-Positionen des Manipulators (10),
Referenz-Orientierungen des Manipulators (10),
kartesische Referenz-Position eines Werkzeugmittelpunktes des Manipulators (10),
zeitliche Änderungen einer Referenz-Pose des Manipulators (10),
zeitliche Änderungen eines Referenz-Achswinkels des Manipulators (10),
zeitliche Änderungen einer Referenz-Position des Manipulators (10),
zeitliche Änderungen einer Referenz-Orientierung des Manipulators (10),
zeitliche Änderungen einer kartesischen Referenz-Position eines Werkzeugmittelpunktes des Manipulators (10),
Referenz-Größen und/oder Referenz-Größenverhältnisse einzelner Komponenten des Manipulators.

12. Verfahren nach einem der voranstehenden Ansprüche, wobei die 3D-Kamera eine plenoptische Kamera ist, und wobei das Erfassen des dreidimensionalen Bildes ein Erfassen eines vierdimensionalen Lichtfeldes mittels der plenoptischen Kamera von dem zumindest einen Teils des zu identifizierenden Manipulators (10) umfasst.

13. Tragbares Endgerät (16), umfassend eine 3D-Kamera und eine Gerätesteuerung, wobei die Gerätesteuerung eingerichtet ist aus einem erfassten Bild eines Manipulators den Ist-Zustand der Achswinkel des Manipulators zu bestimmen und wobei die Gerätesteuerung vorzugsweise weiter eingerichtet ist, um ein Verfahren nach einem der Ansprüche 1 bis 12 durchzuführen.

14. Robotersystem, umfassend einen Manipulator (10) und ein tragbares Endgerät (16), welches eine 3D-Kamera umfasst, wobei das Robotersystem ferner eine Steuerung aufweist welche eingerichtet ist ein Verfahren nach einem der Ansprüche 1 bis 12 durchzuführen.

15. Tragbares Endgerät (16) nach Anspruch 13 oder Robotersystem nach Anspruch 14, wobei die 3D-Kamera eine plenoptische Kamera ist.

## Claims

1. Method for identifying a manipulator (10) from a plurality of manipulators by means of a portable terminal (16), wherein each manipulator comprises a manipulator controller and wherein the portable terminal (16) comprises a 3D camera, the method comprising the steps of:
i) cyclic communication (21; 32) of the current axis angles and/or other object information from each manipulator controller;
ii) receiving (34) current axis angles and/or other object information as reference states;
a) acquiring (22; 33), by means of the 3D camera of the portable terminal (16), a three-dimensional image of at least part of the manipulator (10) to be identified;
b) determining (22; 34) an actual state of the manipulator (10) based on the acquired three-dimensional image, wherein the actual state of the manipulator contains axis angles and/or other object information;
c) identifying (23, 24; 35, 36) said manipulator (10) based on said determined actual state and said provided reference states comprising comparing one of said provided reference states with said determined actual state,
wherein the actual state and the reference states, respectively, describe a configuration of the manipulator (10).

2. Method according to claim 1, wherein the providing of reference states is performed by a manipulator control.

3. Method according to claim 1 or 2, wherein the providing of reference states is performed wirelessly.

4. Method according to one of the preceding claims, wherein identifying (23, 24; 35, 36) the manipulator (10) comprises determining whether the determined actual state of the manipulator (10) corresponds to at least one of the provided reference states of the manipulator (10).

5. Method according to one of the preceding claims, wherein selecting one of the provided reference states is performed such that the selected reference state was created approximately at the same time as capturing the three-dimensional image.

6. Method according to one of the preceding claims, wherein the selecting of one of the provided reference states of the manipulator (10) is performed in such that the selected reference state is closest to the determined actual state of the manipulator (10).

7. Method according to claim 6, wherein the selecting of one of the provided reference states is performed such that a difference between the selected reference state and the determined actual state is less than a predefined tolerance value.

8. Method according to one of the claims 5 - 7, wherein the selecting of one of the provided reference states is performed by a stationary computer.

9. Method according to one of the preceding claims, wherein the determining of an actual state of the manipulator (10) is performed by the portable terminal (16) or a stationary computer.

10. Method according to one of the preceding claims, wherein the actual state of the manipulator (10) further comprises information about at least one of the following:
actual pose of the manipulator (10),
actual position of the manipulator (10),
actual orientation of the manipulator (10),
cartesian actual position of a tool center point of the manipulator (10),
temporal change of an actual pose of the manipulator (10),
temporal change of an actual axis angle of the manipulator (10),
temporal change of an actual position of the manipulator (10),
temporal change of an actual orientation of the manipulator (10),
temporal change of a cartesian actual position of a tool center point of the manipulator (10),
actual sizes and/or actual size ratios of individual components of the manipulator.

11. Method according to one of the preceding claims, wherein the reference states of the manipulator (10) further comprise information about at least one of the following:
reference poses of the manipulator (10),
reference positions of the manipulator (10),
reference orientations of the manipulator (10),
cartesian reference position of a tool center point of the manipulator (10),
temporal changes of a reference pose of the manipulator (10),
temporal changes of a reference axis angle of the manipulator (10),
temporal changes of a reference position of the manipulator (10),
temporal changes of a reference orientation of the manipulator (10),
temporal changes of a cartesian reference position of a tool center point of the manipulator (10),
reference sizes and/or reference size ratios of individual components of the manipulator.

12. Method according to one of the preceding claims, wherein the 3D camera is a plenoptic camera, and wherein the acquiring of the three-dimensional image comprises acquiring a four-dimensional light field by means of the plenoptic camera of the at least one part of the manipulator (10) to be identified.

13. A portable terminal (16) comprising a 3D camera and a device controller, wherein the device controller is adapted to determine from a captured image of a manipulator the actual state of the axis angles of the manipulator and wherein the device controller is preferably further adapted to perform a method according to any one of claims 1 to 12.

14. Robotic system comprising a manipulator (10) and a portable terminal (16) comprising a 3D camera, the robotic system further comprising a controller adapted to perform a method according to any one of claims 1 to 12.

15. A portable terminal (16) according to claim 13 or a robotic system according to claim 14, wherein the 3D camera is a plenoptic camera.

## Revendications

1. Procédé pour identifier un manipulateur (10) parmi une pluralité de manipulateurs au moyen d'un terminal portable (16), chaque manipulateur comprenant une commande de manipulateur, et le terminal portable (16) comprenant une caméra 3D, le procédé comportant les étapes suivantes :
i) communication cyclique (21 ; 32) des angles axiaux instantanés et/ou d'autres informations d'objet par chaque commande de manipulateur ;
ii) réception (34) d'angles axiaux instantanés et/ou d'autres informations d'objet à titre d'états de référence ;
a) saisie (22 ; 33) d'une image tridimensionnelle, au moyen de la caméra 3D du terminal portable (16), d'au moins une partie du manipulateur (10) à identifier ;
b) détection (22 ; 34) d'un état réel du manipulateur (10) sur la base de l'image tridimensionnelle saisie, l'état réel du manipulateur contenant des angles axiaux et/ou d'autres informations d'objet ;
c) identification (23, 24 ; 35, 36) du manipulateur (10) sur la base de l'état réel détecté et des états de référence fournis, comprenant une comparaison d'un des états de référence fournis avec l'état réel saisi,
l'état réel, respectivement les états de référence décrivant une configuration du manipulateur (10).

2. Procédé selon la revendication 1, la fourniture d'états de référence s'effectuant par l'intermédiaire d'une commande de manipulateur.

3. Procédé selon la revendication 1 ou 2, la fourniture d'états de référence s'effectuant sans fil.

4. Procédé selon une des revendications précédentes, l'identification (23, 24 ; 35, 36) du manipulateur (10) consistant à déterminer si l'état réel détecté du manipulateur (10) concorde avec au moins un des états de référence fournis du manipulateur (10).

5. Procédé selon une des revendications précédentes, la sélection d'un des états de référence fournis s'effectuant de façon que l'état de référence fourni soit établi sensiblement simultanément avec la saisie de l'image tridimensionnelle.

6. Procédé selon une des revendications précédentes, la sélection d'un des états de référence fournis du manipulateur (10) s'effectuant de façon que l'état de référence sélectionné soit le plus proche de l'état réel détecté du manipulateur (10).

7. Procédé selon la revendication 6, la sélection d'un des états de référence fournis s'effectuant de façon qu'une différence entre l'état de référence sélectionné et l'état réel détecté soit inférieure à une valeur de tolérance prédéfinie.

8. Procédé selon une des revendications 5 à 7, la sélection d'un des états de référence fournis s'effectuant par l'intermédiaire d'un ordinateur fixe.

9. Procédé selon une des revendications précédentes, la détection d'un état réel du manipulateur (10) s'effectuant par l'intermédiaire du terminal portable (16) ou d'un ordinateur fixe.

10. Procédé selon une des revendications précédentes, l'état réel du manipulateur (10) comprenant en outre des informations sur au moins un des points suivants :
pose réelle du manipulateur (10),
position réelle du manipulateur (10),
orientation réelle du manipulateur (10),
position réelle cartésienne d'un centre d'outil du manipulateur (10), variation temporelle d'une pose réelle du manipulateur (10),
variation temporelle d'un angle axial réel du manipulateur (10),
variation temporelle d'une position réelle du manipulateur (10),
variation temporelle d'une orientation réelle du manipulateur (10),
variation temporelle d'une position réelle cartésienne d'un centre d'outil du manipulateur (10),
grandeurs réelles et/ou rapports de grandeurs réelles de composants individuels du manipulateur.

11. Procédé selon une des revendications précédentes, les états de référence du manipulateur (10) comprenant en outre des informations sur au moins un des points suivants :
poses de référence du manipulateur (10),
positions de référence du manipulateur (10),
orientations de référence du manipulateur (10),
position de référence cartésienne d'un centre d'outil du manipulateur (10),
variations temporelles d'une pose de référence du manipulateur (10),
variations temporelles d'un angle axial de référence du manipulateur (10),
variations temporelles d'une position de référence du manipulateur (10),
variations temporelles d'une orientation de référence du manipulateur (10),
variations temporelles d'une position de référence cartésienne d'un centre d'outil du manipulateur (10),
grandeurs de référence et/ou rapports de grandeurs de référence de composants individuels du manipulateur.

12. Procédé selon une des revendications précédentes, la caméra 3D étant une caméra plénoptique, et la saisie de l'image tridimensionnelle comprenant une saisie d'un champ de lumière quadridimensionnel, au moyen d'une caméra plénoptique, de la au moins une partie du manipulateur (10) à identifier.

13. Terminal portable (16), comprenant une caméra 3D et une commande d'appareil, la commande d'appareil étant agencée pour déterminer l'état réel des angles axiaux du manipulateur à partir d'une image saisie d'un manipulateur et, en outre, la commande d'appareil étant de préférence agencée pour mettre en oeuvre un procédé selon une des revendications 1 à 12.

14. Système de robot comprenant un manipulateur (10) et un terminal portable (16) qui comprend une caméra 3D, le système de robot comportant en outre une commande qui est agencée pour mettre un oeuvre un procédé selon une des revendications 1 à 12.

15. Terminal portable (16) selon la revendication 13 ou système de robot selon la revendication 14, la caméra 3D étant une caméra plénoptique.
